# EUROPÄISCHE PATENTANMELDUNG

(11) **EP 1 088 737 A2**
(43) Veröffentlichungstag der Anmeldung: **04.04.2001**
(21) Anmeldenummer: 00120250.6
(22) Anmeldetag: 27.09.2000
(51) Int. Cl.: B62D 1/04

(54) **Baugruppe mit Vorrichtung zum Ausrichten von zwei benachbarten Teilen**

(30) Priorität: 30.09.1999 DE 29917214 U
(71) Anmelder: TRW Automotive Safety Systems GmbH & Co. KG, 63743 Aschaffenburg (DE)
(72) Erfinder: Kreuzer, Martin, 63839 Kleinwallstadt (DE)
(74) Vertreter: Kitzhofer, Thomas, Dipl.-Ing.

(57) **Zusammenfassung**

Eine Baugruppe zum Befestigen an einem Sockelteil eines Fahrzeugs mit zwei benachbarten, nacheinander am Sockel zu befestigenden Teilen und einer Vorrichtung zum Ausrichten der Teile ist dadurch gekennzeichnet, daß ein zu montierendes erstes Teil wenigstens einen sich in Richtung zum zu montierenden zweiten Teil erstreckenden Fortsatz aufweist, welcher eine Ausrichtschräge (25) aufweist, die relativ zum zweiten Teil so ausgebildet ist, daß sie bei der Montage der Teile vom zweiten Teil berührt wird.

## Beschreibung

Die Erfindung betrifft eine Baugruppe zum Befestigen an einem Sockelteil eines Fahrzeugs mit zwei benachbarten, nacheinander am Sockel eines Fahrzeug zu befestigenden Teilen und einer Vorrichtung zum Ausrichten der Teile. Insbesondere betrifft die Erfindung eine Baugruppe mit einer Vorrichtung zum Ausrichten eines Multifunktionsschalters an einem Fahrzeuglenkrad zu einem unmittelbar an den Schalter angrenzenden, von der Vorderseite der Lenkradnabe zu montierenden Gassackmodul. Ferner betrifft die Erfindung ein Fahrzeuglenkrad mit einer erfindungsgemäßen Baugruppe.

Wenn zwei Teile nicht aneinander, sondern getrennt nacheinander und nebeneinander an einem Sockelteil, d.h. an einem Fahrzeugteil befestigt werden sollen, müssen diese Teile, wenn sie einen Spalt voneinander aufweisen sollen, exakt zueinander ausgerichtet sein. Ansonsten würde der Spalt nämlich ungleichmäßig verlaufen, was immer wieder ein Grund für Reklamationen ist und ein Anzeichen für ungenaue Montage. Ein Spalt zwischen benachbarten Teilen ist insbesondere dann notwendig, wenn wenigstens eines der beiden Teile auch im Fahrbetrieb beweglich sein soll. Die Erfindung bezieht sich insbesondere auf ein Lenkrad mit einem Multifunktionsschalter, der unmittelbar benachbart zum Gassackmodul angeordnet und, wie das Gassackmodul, am Fahrzeuglenkrad befestigt werden soll. Der Multifunktionsschalter wird dabei zuerst auf der Lenkradnahe befestigt, da das Gassackmodul den Schalter teilweise überdeckt. Das Gassackmodul ist bei vielen Ausführungsformen auch in Richtung der Achse des Lenkrades beweglich, da es zur Betätigung der Hupe gedrückt werden muß. Bei der Montage der Multifunktionsschalter und des Gassackmoduls kann es zu einer Fehlausrichtung der Teile zueinander kommen. Dadurch ist der Spalt nicht gleichmäßig, zum Teil zu groß oder zu klein, was einen Grund für eine Reklamation darstellen kann.

Die Erfindung schafft eine Baugruppe mit einer Vorrichtung zum Ausrichten der benachbarten, nacheinander zu montierenden Teile, die eine schnelle, einfache Montage erlaubt und für einen gleichmäßigen, geringen Spalt zwischen den Teilen sorgt. Dies wird dadurch erreicht, daß das zu montierende erste Teil wenigstens einen sich in Richtung des zu montierenden zweiten Teils erstreckenden Fortsatzes aufweist, der eine Ausrichtschräge aufweist. Diese Ausrichtschräge ist vorzugsweise der Montage- oder Bewegungsrichtung des zweiten Teils zugewandt und relativ zum zweiten Teil so ausgebildet, daß sie bei der Montage vom zweiten Teil berührt wird. Für die bevorzugte Ausführungsform bei der Montage von Multifunktionsschaltern bedeutet dies, daß der Multifunktionsschalter einen Fortsatz mit einer Ausrichtschräge hat, die in Montagerichtung des Moduls, d.h. in Achsrichtung gewandt ist und schräg zur Achsrichtung liegt. Beim Einsetzen des Gassackmoduls kommt es stets zum Kontakt zwischen dem Modul und der Ausrichtfläche. Über die Ausrichtfläche wird dann der Multifunktionsschalter verschoben und auf Abstand zum Gassackmodul gebracht, bevor der Multifunktionsschalter endgültig an der Lenkradnabe festgeschraubt wird. Der Multifunktionsschalter hat also einen an ihm angeformten Fortsatz, der sich unmittelbar am Gassackmodul durch Kontakt mit diesem ausrichtet.

Damit die Richtungen, in denen der Multifunktionsschalter bei Kontakt mit dem Gassackmodul verschoben wird, festgelegt ist, ist vorzugsweise wenigstens eine, das erste Teil, d.h. den Multifunktionsschalter aufnehmende Führung vorgesehen, die eine Verschiebung desselben zum zweiten Teil, d.h. zum Gassackmodul und von diesem weg erlaubt. Diese Führung ist vorzugsweise eine Langlochführung im oder nahe des Fortsatzes selbst, in die ein Zapfen am Sockelteil, d.h. der Lenkradnabe ragt.

Die Montage und Ausrichtung von Multifunktionsschalter zu Gassackmodul wird zudem dadurch noch erleichtert, daß gemäß der bevorzugten Ausführungsform ein Widerstandselement vorgesehen ist, das das erste Teil in der nicht ausgerichteten Stellung vor der Montage des zweiten Teils hält. Damit soll ausgeschlossen werden, daß das erste Teil undefiniert am Sockelteil angebracht ist, bevor es durch das zweite Teil verschoben wird. Der Verschiebung setzt das Widerstandselement einen Widerstand entgegen, damit auch stets eine Berührung bei der Montage des zweiten Teils erfolgt. Schließlich hält das Widerstandselement das erste Teil in ausgerichtetem Zustand, das dann vom Monteur, ohne es mit irgendwelchen anderen Mitteln oder per Hand zu fixieren, in der ausgerichteten Position am Sockelteil befestigt wird, zum Beispiel angeschraubt wird.

Das Widerstandselement ist vorzugsweise eine Rast- oder Ratschverbindung, wobei ein Rastelement (z.B. ein Zapfen) in eine Verzahnung eingreift. Diese Verzahnung kann im Langloch ausgebildet sein, das damit eine Doppelfunktion inne hat, indem es zur Führung als auch zur Lagefixierung des ersten Teils dient.

Das Widerstandselement kann auch ausschließlich durch eine Preßpassung erreicht werden, indem zum Beispiel ein übergroßer Zapfen in das Langloch ragt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf eine linke Hälfte eines erfindungsgemäßen Lenkrades im Bereich der Nabe mit der daran befestigten erfindungsgemäßen Baugruppe, die ein Gassackmodul und Multifunktionsschalter aufweist, wobei die rechte Hälfte symmetrisch hierzu ausgebildet ist und wobei Multifunktionsschalter und Multifunktionsschalter mit der besonderen Vorrichtung zum Ausrichten ausgestattet sind, und
- Figur 2 einen Schnitt durch Multifunktionsschalter und Gassackmodul gemäß der Linie II-II in Figur 1, der die Vorrichtung exakter zeigt.

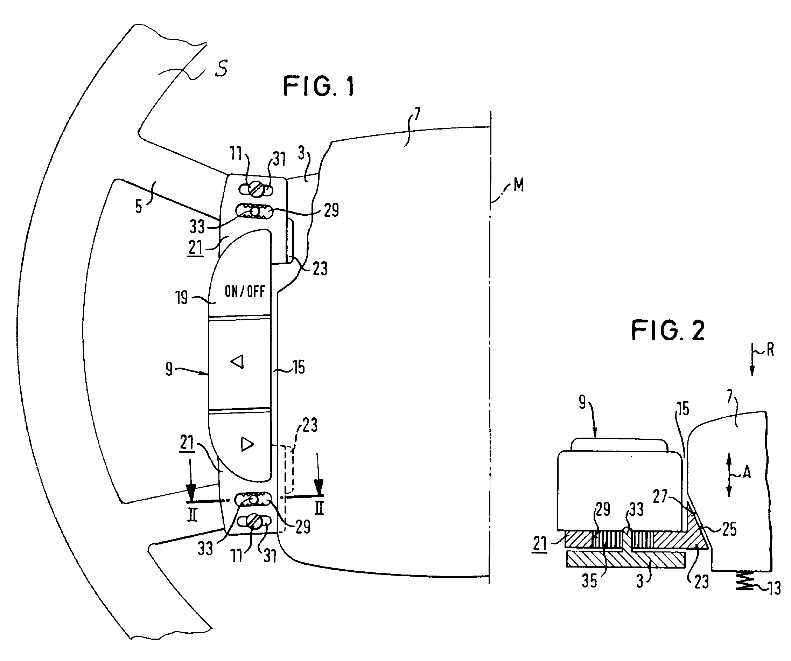

In Figur 1 ist ein Teil eines Fahrzeuglenkrades gezeigt, das eine Lenkradnabe 3, davon ausgehende Speichen 5 und einen abschnittsweise gezeigten Lenkradkranz S aufweist. Auf der Lenkradnabe 3 ist ein Gassackmodul 7 befestigt, welches einen geschlossenen, einen Gassack mit Gasgenerator enthaltenden Behälter darstellt. Das Gassackmodul 7 wird durch Schrauben oder eine Rastverbindung an seiner Unterseite (der Seite, die der Lenkradnabe 3 zugewandt ist) an der Nabe befestigt. Links und rechts vom Gassackmodul 7, wobei in Figur 1 nur die linke Hälfte gezeigt ist, ist ein Multifunktionsschalter 9 angeordnet, welcher ebenfalls an der Lenkradnabe 3 über Schrauben 11 befestigt ist.

Das Gassackmodul 7 ist in axialer Richtung A (vgl. Figur 2) geringfügig verschiebbar gelagert, da es zur Betätigung der Fahrzeughupe gedrückt werden kann. Eine Feder 13 drückt dabei das Gassackmodul immer in die Ausgangsstellung, weg von der Lenkradnabe, die im übrigen in Figur 2 nur abschnittsweise dargestellt ist.

Der Multifunktionsschalter 9 grenzt unmittelbar an das Gassackmodul 7 an und ist von ihm nur durch einen schmalen, konstanten Spalt 15 getrennt. Dieser Spalt 15 hat eine gleichmäßige Dicke über seinen gesamten sichtbaren Verlauf, was durch eine Vorrichtung zum Ausrichten von Multifunktionsschalter 9 zu Gassackmodul 7 erreicht wird. Diese Vorrichtung weist zwei einstückige, an das Gehäuse 19 des Multifunktionsschalters angeformte Haltefüße 21 auf, die im montierten Zustand durch eine separate Abdeckung nicht sichtbar sind. Diese Haltefüße 21 wiederum haben in Richtung zum Gassackmodul 7 gewandte und unter das Gassackmodul 7 (vgl. Figur 2) ragende Fortsätze 23. Das Gassackmodul 7, die Multifunktionsschalter 9 und die Vorrichtung bilden eine Baugruppe aus im wesentlichen zwei nacheinander am Lenkrad zu befestigenden Teilen.

Die Haltefüße 21 sind an den Enden des langgestreckten Multifunktionsschalters 9 vorgesehen, damit die Halterung und Ausrichtung des Multifunktionsschalters 9 verbessert wird, indem der Abstand der Befestigungsschrauben 11 und der Fortsätze 23 voneinander so groß wie möglich gewählt wird. Die Fortsätze 23 erstrecken sich, wie gesagt, in Richtung zum Gassackmodul 7 und an ihrem freien Ende aufwärts (vgl. Figur 2). Sie besitzen jeweils eine von der Mittelachse M nach oben und außen weisende Ausrichtschräge 25. Diese Ausrichtschräge 25 verläuft parallel zu einer Ausrichtschräge 27 im Bereich des unteren Endes des Gassackmoduls 7. Die Ausrichtschräge 25 ist aufgrund ihrer Lage auch der Montagerichtung R des Gassackmoduls zugewandt. Das Gassackmodul 7 wird immer in Axialrichtung, d.h. von oben auf die Lenkradnabe 3 aufgesetzt und montiert.

Die Vorrichtung umfaßt nicht nur den Fortsatz 23 und die beiden Ausrichtschrägen 25, 27, sondern auch noch Führungen in Form von Langlöchern 29 in den Haltefüßen 21. Diese erstrecken sich im wesentlichen quer zur Längserstreckung des Spalts 15. Seitlich zu jedem Langloch 29 ist auch noch ein Langloch 31 vorgesehen, durch das sich die Schrauben 11 erstrecken. Von der Lenkradnabe 3 steht im Bereich jedes Langlochs 29 ein Rastelement in Form eines Zapfens 33 nach oben vor und ragt durch das Langloch 29. Auch der Zapfen ist ein Teil der Vorrichtung zum Ausrichten des Multifunktionsschalters 9 zum Gassackmodul 7. Auf der Innenseite hat das Langloch 29 im Bereich seiner Längsseiten jeweils eine Verzahnung 35, wobei die Zähne parallel zum Zapfen 33 verlaufen. Diese Verzahnung bildet zusammen mit dem Zapfen 33 ein Widerstandselement in Form einer Rastverbindung. Zapfen 31 und Langloch 29 sind in ihren Abmaßen so aufeinander abgestimmt, daß zwischen beiden eine Preßpassung vorliegt, d.h. der Zapfen 33 wird von den Längsseiten des Langlochs 29 zusammengedrückt. Der Zapfen 33 bildet einen Teil der Baugruppe. Gegebenenfalls kann auch die Nabe oder das gesamte Lenkrad als zur Baugruppe gehörend angesehen werden.

Die Montage und Ausrichtung von Multifunktionsschalter 9 und Gassackmodul 7 auf der Lenkradnabe 3 und zueinander wird im folgenden erläutert.

Der Multifunktionsschalter 9 bildet das zuerst zu montierende Teil. Der Multifunktionsschalter 9 wird auf die Zapfen 33 aufgesetzt und zwar so, daß der Multifunktionsschalter 9 zu nahe am später montierenden Gassackmodul 7 angeordnet wäre. Aufgrund der Preßpassung und aufgrund der Rastverbindung wird die noch nicht ausgerichtete vorläufige Stellung des Multifunktionsschalters 9 gehalten, so daß der Monteur keine zusätzlichen Montagehilfen oder Gerätschaften benötigt. Anschließend wird das Gassackmodul 7 von oben in Richtung R auf die Lenkradnabe 3 aufgesetzt und z.B. von der Rückseite der Lenkradnabe aus verschraubt. Das Gassackmodul 7 wird dabei maximal nach unten entgegen der Kraft der Feder 13 bis zu einem Anschlag gedrückt. Dabei kommt es zwangsläufig zur Berührung der beiden Ausrichtschrägen 25, 27 auf jedem Ende des Multifunktionsschalters 9. Durch die Bewegung des Gassackmoduls 7 in Richtung R verschiebt sich zwangsläufig der Multifunktionsschalter 9 gleichmäßig nach außen und richtet sich zum Gassackmodul 7 exakt aus. Wenn die unterste Stellung des Gassackmoduls 7 erreicht wird, ist auch der Multifunktionsschalter 9 in seiner endgültigen Montagestellung. Anschließend wird das Gassackmodul 7 wieder losgelassen, und die Feder 13 drückt es nach oben, so daß die beiden Ausrichtschrägen 25, 27 einen geringen Abstand voneinander haben, wie es in Figur 2 gezeigt ist. Dem Nachaußenschieben des Multifunktionsschalters 9 setzt das Widerstandselement in Form der Rastverbindung, gebildet aus Zapfen, Verzahnung und Langloch, einen Widerstand entgegen. Der Zapfen 23 rastet bei der Verschiebung des Multifunktionsschalters 9 zwischen zwei andere Zähne. In der endgültigen Stellung wird durch diese Rastverbindung die Ausrichtung des Multifunktionsschalters 9 arretiert. In dieser Stellung werden dann die Befestigungsschrauben 11 vollständig festgezogen.

Der Spalt 15 ist damit von Fahrzeug zu Fahrzeug immer gleich und längs seiner Erstreckung stets gleich breit.

Von außen ist der Fortsatz 23 nicht zu sehen, denn das Gassackmodul 7 steht auf seiner der Lenkradnabe 3, welches ein Sockelteil bildet, abgewandten Seite nach außen über und verdeckt den Fortsatz 23 samt Ausrichtschräge 25.

Die Montage des zuerst zu montierenden Teils (Multifunktionsschalter 9) und des nachfolgend zu montierenden, zweiten Teils (Gassackmodul 7) kann natürlich auch dadurch erfolgen, daß zuerst das Gassackmodul 7 fest mit der Lenkradnabe 3 verbunden wird. Das Gassackmodul 7 kann sich also nur noch in Richtung des Doppelpfeiles A bewegen und wird durch die Feder 13 nach oben gedrückt. Anschließend wird der Multifunktionsschalter 9 seitlich gegen das Gassackmodul 7 gedrückt, bis die Ausrichtschrägen 25, 27 einander berühren. Nun wird das Gassackmodul 7 nach unten gedrückt, wodurch der Multifunktionsschalter 9 nach außen in seine endgültige Position verfahren wird, und in der er dann auch an der Lenkradnabe 3 festgeschraubt wird.

## Patentansprüche

1. Baugruppe zum Befestigen an einem Sockelteil eines Fahrzeugs mit zwei benachbarten, nacheinander am Sockel zu befestigenden Teilen und einer Vorrichtung zum Ausrichten der Teile,
dadurch gekennzeichnet,
daß ein zu montierendes erstes Teil wenigstens einen sich in Richtung zum zu montierenden zweiten Teil erstreckenden Fortsatz aufweist, welcher eine Ausrichtschräge (25) aufweist, die relativ zum zweiten Teil so ausgebildet ist, daß sie bei der Montage der Teile vom zweiten Teil berührt wird.

2. Baugruppe nach Anspruch 1, dadurch gekennzeichnet, daß das erste Teil so ausgebildet ist, daß es zuerst montiert werden muß und daß die Ausrichtschräge (25) der Montagerichtung oder der Bewegungsrichtung des zweiten Teils im montierten Zustand zugewandt ist.

3. Baugruppe nach Anspruch 1 oder 2, dadurch gekennzeichnet, daß das Sockelteil eine Nabe (3) eines Fahrzeuglenkrades, das erste Teil ein Multifunktionsschalter (9) und das zweite Teil ein mit geringem, gleichmäßigem Spalt zum Multifunktionsschalter (9) angeordnetes, von der Vorderseite des Lenkrades aus zu montierendes Gassackmodul (7) ist.

4. Baugruppe nach einem der vorhergehenden Ansprüche, gekennzeichnet durch wenigstens eine, das erste Teil aufnehmende Führung (29, 31), die eine Verschiebung des ersten Teils in Richtung zum zweiten Teil und von diesem weg erlaubt.

5. Baugruppe nach Anspruch 4, dadurch gekennzeichnet, daß die Führung (29, 31) ein Langloch nahe des Fortsatzes (23) ist.

6. Baugruppe nach einem der vorhergehenden Ansprüche, gekennzeichnet durch ein Widerstandselement, das das erste Teil in der nicht ausgerichteten Stellung vor Montage des zweiten Teils hält, das eine Verschiebung des ersten Teils bei Montage des zweiten Teils und bei Berührung der Ausrichtschräge (25) zuläßt und das der Verschiebung des ausgerichteten ersten Teils einen Widerstand entgegensetzt.

7. Baugruppe nach Anspruch 5 und 6, dadurch gekennzeichnet, daß das Widerstandselement ein in das Langloch (29) ragender Zapfen (33) ist, der mit einer Preßpassung im Langloch (29) aufgenommen ist.

8. Baugruppe nach Anspruch 6 oder 7, dadurch gekennzeichnet, daß das Widerstandselement eine Rastverbindung ist.

9. Baugruppe nach Anspruch 8, dadurch gekennzeichnet, daß die Rastverbindung durch eine Verzahnung (35) und ein in dieses eingreifendes Rastelement gebildet ist, wobei Verzahnung (35) und Rastelement am ersten Teil oder am Sockelteil vorgesehen sind.

10. Baugruppe nach den Ansprüchen 5 und 9, dadurch gekennzeichnet, daß die Verzahnung (35) im Langloch (29) der Führung vorgesehen ist und das Rastelement ein in das Langloch (29) ragender Zapfen (33) ist.

11. Baugruppe nach einem der vorhergehenden Ansprüche, dadurch gekennzeichnet, daß das zweite Teil auf seiner dem Sockelteil abgewandten Seite in Richtung Fortsatz (23) übersteht und wenigstens die Ausrichtschräge (25) verdeckt.

12. Baugruppe nach einem der vorhergehenden Ansprüche, dadurch gekennzeichnet, daß das zweite Teil ebenfalls eine Ausrichtschräge (27) aufweist, die die Ausrichtschräge (25) des ersten Teils bei der Montage berührt und parallel zu ihr verläuft.

13. Fahrzeuglenkrad mit einer Nabe und einer Baugruppe nach einem der vorhergehenden Ansprüche, dadurch gekennzeichnet, daß das erste Teil ein Multifunktionsschalter und das zweite Teil ein Gassackmodul ist, wobei Schalter und Modul im montierten Zustand durch einen Spalt voneinander beabstandet sind.
